# EUROPEAN PATENT APPLICATION

(11) **EP 1 293 859 A2**
(43) Date of publication of application: **19.03.2003**
(21) Application number: 02019814.9
(22) Date of filing: 05.09.2002
(51) Int. Cl.: G06F 1/00

(54) **Method and apparatus for protecting personal information**

(30) Priority: 05.09.2001 JP 2001268164
(71) Applicant: NEC CORPORATION, Tokyo (JP)
(72) Inventor: Sakata, Kazuhiro, Minato-ku, Tokyo (JP)
(74) Representative: Betten & Resch

(57) **Abstract**

A method and an apparatus for executing a program obtained from an external device with protecting at least one privacy information requested to be utilized by the program is provided. At least one program is obtained from the at least one external device. A division is made to allow or inhibit the at least one program to utilize the at least one privacy information based on at least one mediation result obtained based on at least one conditional information to allow or inhibit the at least one program to utilize at least one privacy information.

## Description

The present invention relates to a program executing apparatus, and a program executing method as well as a program executing program, and more particularly to a method and an apparatus for executing an externally obtained computer program from an external program provider with protecting user's privacy information based on a privacy information management policy information given by the external program acquirer or user.

All of patents, patent applications, patent publications, scientific articles and the like, which will hereinafter be cited or identified in the present application, will, hereby, be incorporated by references in their entirety in order to describe more fully the state of the art, to which the present invention pertains.

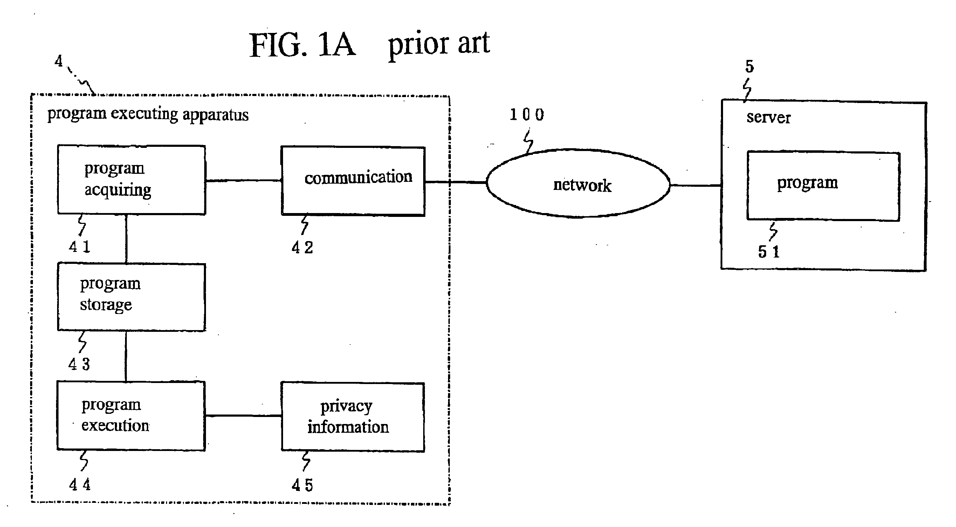

It has been known to a person skilled in the art, to which the invention pertains, that a program executing apparatus obtains one or more computer programs from one or more program provider through a computer network for the purpose of executing the externally obtained one or more computer programs. FIG. 1 is a block diagram illustrative of a conventional program executing apparatus connected through a network to a server computer. A program executing apparatus 4 is connected through a network 100 to a server computer 5. The server computer 5 has a program storage unit 51 which stores one or more computer programs to be executed by the program executing apparatus 4. The program executing apparatus 4 may be realized by a computer. The program executing apparatus 4 is designed to obtain one or more computer programs from the server computer 5 through the network 100.

The program executing apparatus 4 includes a program acquisition unit 41, a communication unit 42, a program storage unit 43, a program execution unit 44 and a privacy information storage unit 45. The communication unit 42 makes communications through the network 100 to the server computer 5. The program acquisition unit 41 acquires one or more computer programs through the communication unit 42 and the network 100 from the server computer 5, wherein the one or more computer programs were stored in the program storage unit 51 of the server computer 5. The program storage unit 43 stores the one or more computer programs acquired by the program acquisition unit 41. The program execution unit 44 executes the one or more computer programs which were stored in the program storage unit 43. The privacy information storage unit 45 stores one or more user's privacy informations. The program execution unit 44 may, in case, refer the one or more user's privacy informations in accordance with an instruction of the currently executing computer program.

In one typical example, an information related to a user's current position is obtained from the privacy information storage unit 45, and the user's current position information is sent through the network 100 to the server computer 5, so that a map information around the user's current position is obtained from the server computer 5 through the network 100.

In another typical example, user's privacy informations such as user's name, user's address and credit card number are obtained from the privacy information storage unit 45 and sent through the network 100 to the server computer 5 for electronic payment.

The above system allows the program executing apparatus 4 to obtain the program from the server computer 5 to execute the obtained program, so that the program executing apparatus 4 executes one or more processes designated by the server computer 5 and utilizes one or more services provided by the server computer 5.

Another example of the conventional program executing apparatus is disclosed in Japanese laid-open patent publication No. 2001-117769. For the purpose of confirming a safety of a program, the conventional program executing apparatus obtains the program along with a program identification information, so that the conventional program executing apparatus makes a decision to execute the obtained program with reference to the obtained program identification information.

The above conventional program executing apparatuses have serious issues to protect user's privacy informations. The program execution unit 44 unconditionally executes the obtained program from the server computer 5, for which reason if the server computer 5 provides the conventional program executing apparatus 4 with a program to instruct the conventional program executing apparatus 4 to provide the server computer 5 with one or more user's privacy informations stored in the privacy information storage unit 45, then the conventional program executing apparatus 4 unconditionally send the one or more user's privacy informations to the server computer 5. This means that the server computer 5 may invade or infringe the user's privacy as long as the conventional program executing apparatus 4 unconditionally executes the obtained program from the server computer 5.

It was proposed to inhibit the use of the privacy informations stored in the privacy information storage unit 45 by the program, for allowing the server computer 5 to ensure that the user's privacy be protected. Some of the programs may make it impossible to utilize or use the privacy informations even if the user wishes to authorize only one or more programs provided from a user's designated server computer to use or utilize the user's privacy informations stored in the privacy information storage unit 45.

In the above circumstances, the development of a novel method and apparatus for executing program free from the above problems is desirable.

Accordingly, it is an object of the present invention to provide a novel apparatus for executing an externally obtained program free from the above problems.

It is a further object of the present invention to provide a novel apparatus for executing an externally obtained program, wherein the apparatus is capable of selectively inhibiting the externally obtained program from using privacy informations based on a designation given by user and/or an external program acquirer.

It is a still further object of the present invention to provide a novel method for executing an externally obtained program free from the above problems.

It is yet a further object of the present invention to provide a novel method for executing an externally obtained program, wherein the apparatus is capable of selectively inhibiting the externally obtained program from using privacy informations based on a designation given by user and/or an external program acquirer.

It is an additional object of the present invention to provide a novel computer program for executing an externally obtained program free from the above problems.

It is a further additional object of the present invention to provide a novel computer program for executing an externally obtained program, wherein the apparatus is capable of selectively inhibiting the externally obtained program from using privacy informations based on a designation given by user and/or an external program acquirer.

The present invention provides a method and an apparatus for protecting at least one privacy information requested to be utilized by at least one program obtained from at least one external device. The method includes : obtaining at least one program from the at least one external device ; and deciding to allow or inhibit the at least one program to utilize the at least one privacy information based on at least one mediation result obtained based on at least one conditional information to allow or inhibit the at least one program to utilize at least one privacy information.

The above and other objects, features and advantages of the present invention will be apparent from the following descriptions.

Preferred embodiments according to the present invention will be described in detail with reference to the accompanying drawings.

FIG. 1 is a block diagram illustrative of a conventional program executing apparatus connected through a network to a server computer.

FIG. 2 is a block diagram illustrative of a novel program executing apparatus connected through a network to a server computer in a first embodiment in accordance with the present invention.

FIG. 3 is a view of one example of the privacy information management policy stored in the privacy information management policy storage unit in the program executing apparatus shown in FIG. 2.

FIG. 4 is a view of another example of the privacy information management policy stored in the privacy information management policy storage unit in the program executing apparatus shown in FIG. 2.

FIG. 5 is a view of another example of the privacy information utilizing policy stored in the privacy information utilizing policy storage unit in the server computer shown in FIG. 2.

FIG. 6 is a view of one typical example of the program information stored in the program storage unit included in the program executing apparatus shown in FIG. 2.

FIG. 7 is a flow chart of an acquisition process for acquiring the program in the first embodiment of the present invention.

FIG. 8 is a flow chart of process for deciding to allow or inhibit utilization of privacy information in the first embodiment of the present invention.

FIG. 9 is a view of one typical example of the program information stored in the program storage unit in the second embodiment in accordance with the present invention.

FIG. 10 is a flow chart of program acquisition processes for acquiring the program in the second embodiment of the present invention.

FIG. 11 is a flow chart of process for deciding to allow or inhibit utilization of privacy information in the second embodiment of the present invention.

FIG. 12 is a view of one typical example of the program information stored in the program storage unit in the third embodiment in accordance with the present invention.

FIG. 13 is a flow chart of program acquisition processes for acquiring the program in the third embodiment of the present invention.

FIG. 14 is a flow chart of process for deciding to allow or inhibit utilization of privacy information in the third embodiment of the present invention.

FIG. 15 is a block diagram illustrative of a novel program executing apparatus connected through a network to a server computer in a fourth embodiment in accordance with the present invention.

FIG. 16 is a flow chart of process for deciding to allow or inhibit utilization of privacy information in the fourth embodiment of the present invention.

A fist aspect of the present invention is a method for protecting at least one privacy information requested to be utilized by at least one program obtained from at least one external device. The method includes the following processes. At least one program is obtained from the at least one external device. At least one privacy information utilizing policy is also obtained, which corresponds to the at least one program. The at least one privacy information utilizing policy indicates a utilizing policy to utilize the obtained privacy informations by the program. At least one mediation result is generated based on at least both the at least one privacy information utilizing policy and at least one privacy information management policy which indicates a management policy to allow the at least one program to utilize at least one privacy information. A decision is made to allow or inhibit the at least one program to utilize the at least one privacy information based on the at least one mediation result.

It is also possible that the at least one external device comprises at least one server computer, and the at least one privacy information utilizing policy is obtained from the at least one server computer.

It is also possible that the at least one external device comprises at least one server computer, and the at least one privacy information utilizing policy is obtained from at least one different external device from the at least one server computer.

It is also possible that the program and the at least one privacy information utilizing policy corresponding to the program are given with a correspondence with each other and stored in a storage unit.

It is also possible that the deciding step is made upon receipt of a privacy information utilizing request from the at least one program which is on execution process.

It is also possible that the deciding step is made upon starting to execute the at least one program for allowing execution of the at least one program free from any interruption of the deciding step.

It is also possible that the at least one privacy information has been stored in a privacy information storage unit.

It is also possible that if the at least one privacy information absent in the privacy information storage unit is requested to be utilized by the program, then a request for entry of the at least one privacy information is issued to an external entity.

It is also possible that if the at least one privacy information utilizing policy is not available from the external device, then a default privacy information utilizing policy is used.

It is also possible that together with the at least one program, at least one program provider information is obtained which indicates at least one location from which the at least one program is provided, and the at least one privacy information utilizing policy is obtained based on the at least one program provider information.

It is also possible that the at least one mediation result generated is stored into a storage unit ; and a verification is made whether or not the at least one mediation result is present in the storage unit, and only if the at least one mediation result is absent, the at least one mediation result is generated.

It is also possible that a verification is made whether or not the at least one privacy information management policy has a program dependency ; and if the at least one privacy information management policy is free of any program dependency, then the at least one privacy information utilizing policy is not obtained, and the at least one mediation result is generated based on the at least one privacy information management policy only.

It is also possible that the at least one privacy information utilizing policy is obtained upon receipt of a privacy information utilizing request from the at least one program which is on execution process.

It is also possible that the at least one privacy information utilizing policy is obtained upon starting to execute the at least one program for allowing execution of the at least one program free from any interruption of the deciding step.

It is also possible that the at least one privacy information utilizing policy is obtained together with the at least one program.

It is also possible that the program and the at least one mediation result are given with a correspondence with each other and stored in a storage unit.

It is also possible that a verification is made whether or not the at least one mediation result is present in the storage unit, and only if the at least one mediation result is absent, the at least one mediation result is generated.

A second aspect of the present invention is a method for protecting at least one privacy information requested to be utilized by at least one program obtained from at least one external device. The method includes : obtaining at least one program from the at least one external device ; and deciding to allow or inhibit the at least one program to utilize the at least one privacy information based on at least one mediation result obtained based on at least one conditional information to allow or inhibit the at least one program to utilize at least one privacy information.

It is also possible that the at least one conditional information is given from at least one of an external device and an external entity.

It is also possible that the at least one conditional information comprises at least one mediation result obtained based on at least one privacy information management policy which indicates a management policy to allow the at least one program to utilize at least one privacy information, provided that the at least one privacy information management policy is free of any program dependency.

It is also possible that the at least one conditional information comprises at least one mediation result obtained based on both at least one privacy information management policy which indicates a management policy to allow the at least one program to utilize at least one privacy information and at least one privacy information utilizing policy indicating a utilizing policy to utilize the obtained privacy informations by the program, provided that the at least one privacy information management policy has a program dependency.

It is also possible that the at least one external device comprises at least one server computer, and the at least one privacy information utilizing policy is obtained from the at least one server computer.

It is also possible that the at least one external device comprises at least one server computer, and the at least one privacy information utilizing policy is obtained from at least one different external device from the at least one server computer.

It is also possible that the program and the at least one privacy information utilizing policy corresponding to the program are given with a correspondence with each other and stored in a storage unit.

It is also possible that the deciding step is made upon receipt of a privacy information utilizing request from the at least one program which is on execution process.

It is also possible that the deciding step is made upon starting to execute the at least one program for allowing execution of the at least one program free from any interruption of the deciding step.

It is also possible that the at least one privacy information has been stored in a privacy information storage unit.

It is also possible that if the at least one privacy information absent in the privacy information storage unit is requested to be utilized by the program, then a request for entry of the at least one privacy information is issued to an external entity.

It is also possible that if the at least one privacy information utilizing policy is not available from the external device, then a default privacy information utilizing policy is used.

It is also possible that together with the at least one program, at least one program provider information is obtained which indicates at least one location from which the at least one program is provided, and the at least one privacy information utilizing policy is obtained based on the at least one program provider information.

It is also possible that the at least one conditional information is stored into a storage unit ; and a verification is made whether or not the at least one conditional information is present in the storage unit, and only if the at least one conditional information is absent, the step of generating the at least one conditional information is made.

It is also possible that the at least one privacy information utilizing policy is obtained upon receipt of a privacy information utilizing request from the at least one program which is on execution process.

It is also possible that the at least one privacy information utilizing policy is obtained upon starting to execute the at least one program for allowing execution of the at least one program free from any interruption of the deciding step.

It is also possible that the at least one privacy information utilizing policy is obtained together with the at least one program.

It is also possible that the program and the at least one conditional information are given with a correspondence with each other and stored in a storage unit.

It is also possible that a verification is made whether or not the at least one conditional information is present in the storage unit, and only if the at least one conditional information is absent, the step of generating the at least one conditional information is made.

A third aspect of the present invention is a computer-readable-program to be executed for implementing a process for protecting at least one privacy information requested to be utilized by at least one program obtained from at least one external device. The computer-readable-program includes the following processes. At least one program is obtained from the at least one external device. At least one privacy information utilizing policy is also obtained, which corresponds to the at least one program. The at least one privacy information utilizing policy indicates a utilizing policy to utilize the obtained privacy informations by the program. At least one mediation result is generated based on at least both the at least one privacy information utilizing policy and at least one privacy information management policy which indicates a management policy to allow the at least one program to utilize at least one privacy information. A decision is made to allow or inhibit the at least one program to utilize the at least one privacy information based on the at least one mediation result.

A fourth aspect of the present invention is a computer-readable-program to be executed for implementing a process for protecting at least one privacy information requested to be utilized by at least one program obtained from at least one external device. The computer-readable-program includes : obtaining at least one program from the at least one external device ; and deciding to allow or inhibit the at least one program to utilize the at least one privacy information based on at least one mediation result obtained based on at least one conditional information to allow or inhibit the at least one program to utilize at least one privacy information.

A fifth aspect of the present invention is a hardware device for implementing a process for protecting at least one privacy information requested to be utilized by at least one program obtained from at least one external device. The hardware device includes : a first functional unit for obtaining at least one program from the at least one external device ; and a second functional unit for deciding to allow or inhibit the at least one program to utilize the at least one privacy information based on at least one mediation result obtained based on at least one conditional information to allow or inhibit the at least one program to utilize at least one privacy information.

A sixth aspect of the present invention is an apparatus for executing at least one program obtained from at least one external device. The apparatus includes the following unit. A program obtaining unit obtains at least one program from the at least one external device as well as at least one privacy information utilizing policy, which corresponds to the at least one program, and the at least one privacy information utilizing policy indicating a utilizing policy to utilize the obtained privacy informations by the program. A mediation unit generates at least one mediation result based on at least both the at least one privacy information utilizing policy and at least one privacy information management policy which indicates a management policy to allow the at least one program to utilize at least one privacy information. A deciding unit decides to allow or inhibit the at least one program to utilize the at least one privacy information based on the at least one mediation result.

It is also possible that the at least one external device comprises at least one server computer, and the at least one privacy information utilizing policy is obtained from the at least one server computer.

It is also possible that the at least one external device comprises at least one server computer, and the at least one privacy information utilizing policy is obtained from at least one different external device from the at least one server computer.

It is also possible to further include a storage unit for storing the program and the at least one privacy information utilizing policy corresponding to the program with a correspondence with each other.

It is also possible that the deciding unit is performed receipt of a privacy information utilizing request from the at least one program which is on execution process.

It is also possible that the deciding unit is performed upon starting to execute the at least one program for allowing execution of the at least one program free from any interruption of the deciding step.

It is also possible to further include a privacy information storage unit for storing the at least one privacy information.

It is also possible that if the at least one privacy information absent in the privacy information storage unit is requested to be utilized by the program, then the apparatus issues a request for entry of the at least one privacy information to an external entity.

It is also possible that if the at least one privacy information utilizing policy is not available from the external device, then a default privacy information utilizing policy is used.

It is also possible that the obtaining unit obtains, together with the at least one program, at least one program provider information which indicates at least one location from which the at least one program is provided, and the obtaining unit further obtains the at least one privacy information utilizing policy based on the at least one program provider information.

It is also possible to further include : a mediation result storage unit for storing the at least one mediation result generated ; and a verifying unit for verifying whether or not the at least one mediation result is present in the storage unit, and only if the at least one mediation result is absent, the mediation unit is performed.

It is also possible to further include : a verifying unit for verifying whether or not the at least one privacy information management policy has a program dependency, and if the at least one privacy information management policy is free of any program dependency, then the obtaining unit does not obtain the at least one privacy information utilizing policy, and the mediation unit generates the at least one mediation result based on the at least one privacy information management policy only.

It is also possible that the obtaining unit obtains the at least one privacy information utilizing policy upon receipt of a privacy information utilizing request from the at least one program which is on execution process.

It is also possible that the obtaining unit obtains the at least one privacy information utilizing policy upon starting to execute the at least one program for allowing execution of the at least one program free from any interruption of the deciding step.

It is also possible that the obtaining unit obtains the at least one privacy information utilizing policy together with the at least one program.

It is also possible to further include : a storage unit for storing the program and the at least one mediation result with a correspondence with each other.

It is also possible to further include : a verifying unit for verifying whether or not the at least one mediation result is present in the storage unit, and only if the at least one mediation result is absent, the mediation unit is performed.

A seventh aspect of the present invention is an apparatus for executing at least one program obtained from at least one external device. The apparatus includes : an obtaining unit for obtaining at least one program from the at least one external device ; and a deciding unit to allow or inhibit the at least one program to utilize the at least one privacy information based on at least one mediation result obtained based on at least one conditional information to allow or inhibit the at least one program to utilize at least one privacy information.

It is also possible that the at least one conditional information is given from at least one of an external device and an external entity.

It is also possible that the at least one conditional information comprises at least one mediation result obtained based on at least one privacy information management policy which indicates a management policy to allow the at least one program to utilize at least one privacy information, provided that the at least one privacy information management policy is free of any program dependency.

It is also possible that the at least one conditional information comprises at least one mediation result obtained based on both at least one privacy information management policy which indicates a management policy to allow the at least one program to utilize at least one privacy information and at least one privacy information utilizing policy indicating a utilizing policy to utilize the obtained privacy informations by the program, provided that the at least one privacy information management policy has a program dependency.

It is also possible that the at least one external device comprises at least one server computer, and the at least one privacy information utilizing policy is obtained from the at least one server computer.

It is also possible that the at least one external device comprises at least one server computer, and the at least one privacy information utilizing policy is obtained from at least one different external device from the at least one server computer.

It is also possible to further include a storage unit for storing the program and the at least one privacy information utilizing policy corresponding to the program are given with a correspondence with each other.

It is also possible that the deciding unit is performed upon receipt of a privacy information utilizing request from the at least one program which is on execution process.

It is also possible that the deciding unit is performed upon starting to execute the at least one program for allowing execution of the at least one program free from any interruption of the deciding step.

It is also possible to further include a privacy information storage unit for storing the at least one privacy information.

It is also possible that if the at least one privacy information absent in the privacy information storage unit is requested to be utilized by the program, then the apparatus issues a request for entry of the at least one privacy information to an external entity.

It is also possible that if the at least one privacy information utilizing policy is not available from the external device, then a default privacy information utilizing policy is used.

It is also possible that the obtaining unit obtains, together with the at least one program, at least one program provider information which indicates at least one location from which the at least one program is provided, and the obtaining unit further obtains the at least one privacy information utilizing policy based on the at least one program provider information.

It is also possible to further include : a storage unit for storing the at least one conditional information ; and a verifying unit for verifying whether or not the at least one conditional information is present in the storage unit, and only if the at least one conditional information is absent, the at least one conditional information is generated.

It is also possible that obtaining unit obtains the at least one privacy information utilizing policy upon receipt of a privacy information utilizing request from the at least one program which is on execution process.

It is also possible that obtaining unit obtains the at least one privacy information utilizing policy upon starting to execute the at least one program for allowing execution of the at least one program free from any interruption of the deciding step.

It is also possible that obtaining unit obtains the at least one privacy information utilizing policy together with the at least one program.

It is also possible to further include a storage unit for storing the program and the at least one conditional information are given with a correspondence with each other.

It is also possible to further include : a verifying unit for verifying whether or not the at least one conditional information is present in the storage unit, and only if the at least one conditional information is absent, the at least one conditional information is generated.

The following embodiments are typical examples for practicing the foregoing aspects of the present invention. Although the subject matters of the present invention have been described in details, the following additional descriptions in one or more typical preferred embodiments or examples will be made with reference to the drawings for making it easy to understand the typical modes for practicing the foregoing aspects of the present invention.

### FIRST EMBODIMENT :

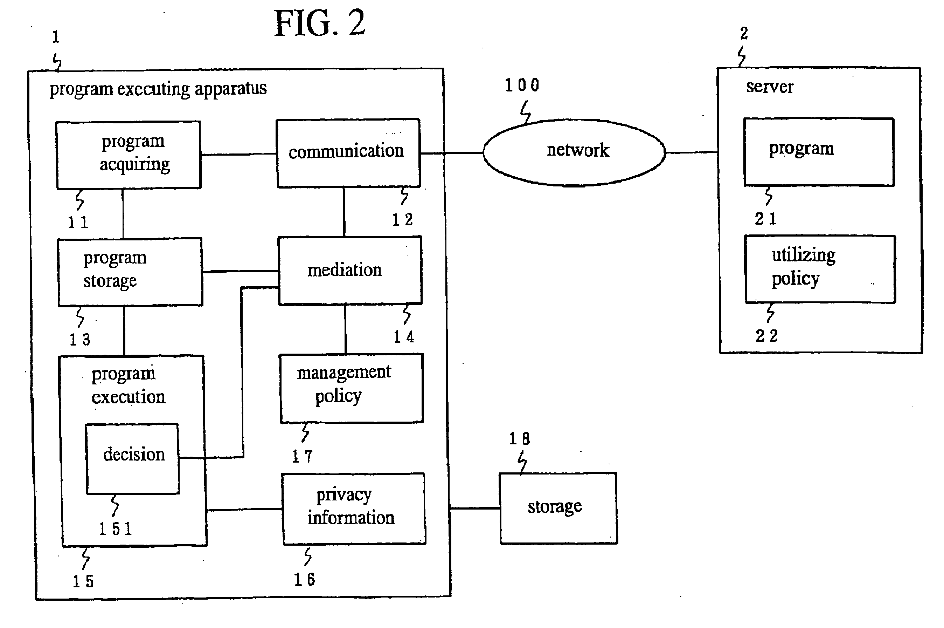

A first embodiment according to the present invention will be described in detail with reference to the drawings. FIG. 2 is a block diagram illustrative of a novel program executing apparatus connected through a network to a server computer in a first embodiment in accordance with the present invention.

A program executing apparatus 1 is connected through a network 100 to a server computer 2. The server computer 2 includes a program storage unit 21 and a privacy information utilizing policy storage unit 22. The program storage unit 21 stores one or more computer programs to be executed by the program executing apparatus 1. The privacy information utilizing policy storage unit 22 stores one or more privacy information utilizing policy informations.

The program executing apparatus 1 is designed to obtain one or more computer programs from the server computer 5 through the network 100 for executing the obtained programs.

The program executing apparatus 1 includes a program acquisition unit 11, a communication unit 12, a program storage unit 13, a mediation unit 14, a program execution unit 15, a privacy information storage unit 16, a privacy information management policy storage unit 17 and a storage medium 18. The communication unit 12 makes communications through the network 100 to the server computer 2. The program acquisition unit 11 acquires one or more computer programs through the communication unit 12 and the network 100 from the server computer 2, wherein the one or more computer programs were stored in the program storage unit 21 of the server computer 2. The program storage unit 13 stores the one or more computer programs acquired by the program acquisition unit 11 from the server computer 2. The program execution unit 15 executes the one or more computer programs which were stored in the program storage unit 13. The program execution unit 15 further includes a privacy information utilizing allowability decision unit 151 for deciding to allow the externally obtained program from the server computer 2 to utilize the privacy information. The privacy information storage unit 16 stores one or more user's privacy informations. The storage medium 18 stores control programs to be executed by the above units respectively. The mediation unit 14 generates a mediation result as allowable conditions for allowing the program stored in the program storage unit 13 to utilize the privacy informations stored in the privacy information storage unit 16. The privacy information management policy storage unit 17 stores privacy information management policy informations.

In the present specification, the term "privacy information(s)" includes any informations in connection with individual or user. Typical examples of the privacy information may include, but not limited to, for example, name, address, telephone number, facsimile number, e-mail address, birthday informations, credit card number, blood type, interests, preferences, personal informations including personal history and carrier information, and any other obtained informations that the individual or user wishes to protect.

The program execution unit 15 executes the program which was stored in the program storage unit 13, wherein the "program" means data which describe one or more processes to be executed by the program execution unit 15. The "execution of the program" means interpolating the program data and executing the one or more processes described by the program data.

The program execution unit 15 executes the program which was stored in the program storage unit 13. If the program needs to utilize the privacy information which is stored in the privacy information storage unit 16, then the privacy information utilizing allowability decision unit 151 in the program execution unit 15 decides to execute the program. Only if the privacy information utilizing allowability decision unit 151 decided to allow the execution of the program, then the program execution unit 15 executes the program.

In other examples, the program execution unit 15 executes the processes based on the program descriptions to instruct the communication unit 12 to communicate through the network 100 to the server computer 2. In still another example, input and output through an user's interface to the user of the program executing apparatus 1, communications to other programs and calculations in the program executing apparatus 1 are other examples.

The "privacy information management policy" is an information which indicates a management policy to allow a requested utilization of the privacy information by the program to be executed by the program execution unit 15. The "privacy information management policy" may include, but not limited to, the kind or type and the accuracy of the privacy information allowed to be utilized, and conditions for the programs, for which the utilization of the privacy information is allowed. In one example of the privacy information management policy, the utilization of "name" and "age" is allowed to only limited programs which are provided from the server computer which ensures to inhibit secondary utilization of the obtained privacy information. In another typical example, the utilization of "sex" is unconditionally allowed to any programs unlimited. In still another typical example, the utilization of "address" is unconditionally inhibited to any programs unlimited. In yet another typical example, the utilization of "current position" is allowed to only limited programs which are provided from the server computer which ensures to inhibit secondary utilization of the obtained privacy information, provided that the accuracy is 1km unit.

The "privacy information utilizing policy" stored in the privacy information utilizing policy storage unit 22 is an information which indicates a utilizing policy to utilize the obtained privacy informations by the program which was provided by the server computer 2. The "privacy information utilizing policy" may include, but not limited to, the kinds of the privacy information to be utilized by the program and the policy to protect the privacy information. In one typical example of the privacy information utilizing policy, the program utilizes limited informations such as "name", "address" and "current position" included in the privacy information. In another typical example, the secondary utilization of the privacy information is inhibited to protect the user's privacy.

The server computer 2 may provide plural programs which have different utilization policies to utilize the privacy informations by the programs. In this case, the server computer 2 may set plural different privacy information utilizing policies corresponding to the respective programs.

The mediation unit 14 generates an information based on the privacy information management policy stored in the privacy information management policy storage unit 17, wherein the information is to be used for allowing the privacy information utilizing allowability decision unit 151 in the program execution unit 15 to decide to allow or inhibit the execution of the program.

If the privacy information management policy describes any condition which depends on the program, then the mediation unit 14 generates a mediation result based on both the privacy information management policy and the privacy information utilizing policy which corresponds to the program. The method of generating the mediation result is not limited but any methods are available which are capable of one definitive mediation result from the privacy information management policy and the privacy information utilizing policy.

If the privacy information management policy and the privacy information utilizing policy are, for example, as described above, then the mediation unit 14 may, for example, generate a mediation result that the allowance to utilize "name" and "position information" at the accuracy of 1km is given to the program.

The mediation unit 14 outputs the mediation result in an available format to allow the privacy information utilizing allowability decision unit 151 to recognize the mediation result. In the example, the privacy information management policy may indicate, but not limited to, the allowance or the inhibition to utilize the privacy information. For example, the privacy information management policy may indicate that the allowance to utilize the privacy information is given depending on a direct designation by the user, so that the privacy information utilizing allowability decision unit 151 to decide to allow or inhibit the execution of the program based on the direct designation by the user.

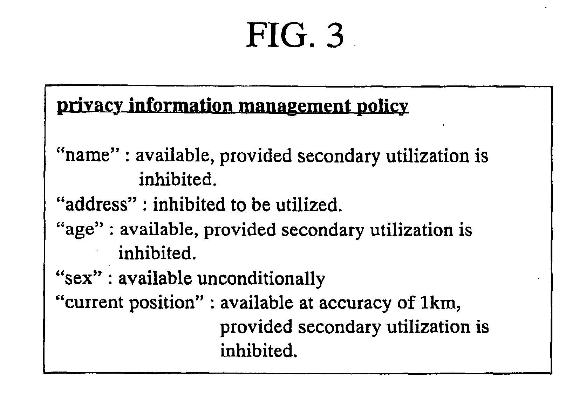

FIG. 3 is a view of one example of the privacy information management policy stored in the privacy information management policy storage unit 17 in the program executing apparatus 1 shown in FIG. 2. The privacy information management policy is as follows. The utilization of "name" is allowed, provided inhibiting secondary utilization thereof. The utilization of "address" is unconditionally inhibited. The utilization of "age" is allowed, provided inhibiting secondary utilization thereof. The utilization of "sex" is unconditionally allowed. The utilization of "current position" is allowed, provided inhibiting secondary utilization thereof at 1km accuracy.

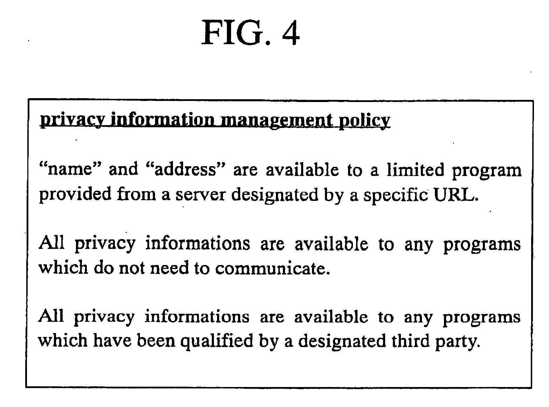

FIG. 4 is a view of another example of the privacy information management policy stored in the privacy information management policy storage unit 17 in the program executing apparatus 1 shown in FIG. 2. The allowance to utilize "name" and "address" in the privacy information is given to only the limited program provided by the server which has a designated "URL". The allowance to utilize all of the privacy information is given to the program which does not need to communicate. The allowance to utilize all of the privacy information is given to the program which was qualified by a designated third party.

The description format of the privacy information management policy is not limited, but which should, of course, be recognizable by the mediation unit 14. The privacy information management policy of the privacy information management policy storage unit 17 has previously been set by a user or a manager of the program executing apparatus 1.

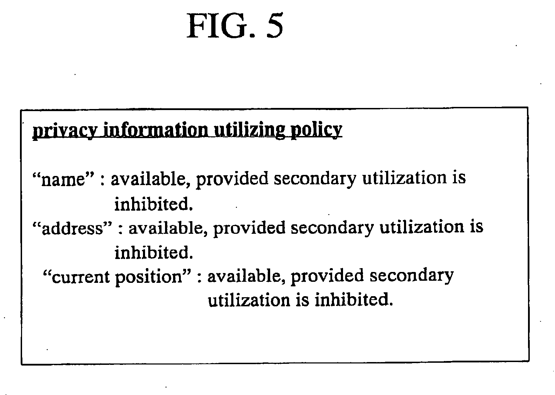

FIG. 5 is a view of another example of the privacy information utilizing policy stored in the privacy information utilizing policy storage unit 22 in the server computer 2 shown in FIG. 2. The allowance of utilization of "name" in the privacy information is given, provided inhibiting secondary utilization thereof. The allowance of the utilization of "address" in the privacy information is also given, provided inhibiting secondary utilization thereof. The allowance of the utilization of "current position" in the privacy information is also given, provided inhibiting secondary utilization thereof. The description format of the privacy information utilizing policy is not limited, but which should, of course, be recognizable by the mediation unit 14.

The program storage unit 13 stores the program which was obtained by the program acquisition unit 11 from the server computer 2. The program acquisition unit 11 stores, in the program storage unit 13, the obtained program along with a program provider information which identifies the server computer 2 which provides the program. The program provider information may be described in any available description format which allows the mediation unit 14 to recognize the server computer 2 which had provided the program which is now stored in the program storage unit 13. The server computer 2 may provide plural programs which have different utilization policies to utilize the privacy informations by the programs. In this case, the program provider information includes not only the server computer but also an additional information which identifies the program in the server computer.

The designation to the server computer and the program is necessary for allowing the program acquisition unit 11 to acquire the program. The available information to designate the server computer and the program is the program provider information. One typical example of the program provider information is URL (uniform resource locator).

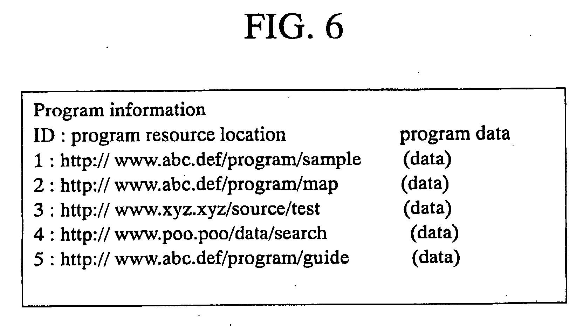

FIG. 6 is a view of one typical example of the program information stored in the program storage unit included in the program executing apparatus shown in FIG. 2. The program information includes ID, program provider informations, and program data. The program provider informations are some URLs as shown in FIG. 6. Namely, each of the five programs "1", "2", "3", "4" and "5" is accompanied with the program provider information and the program data.

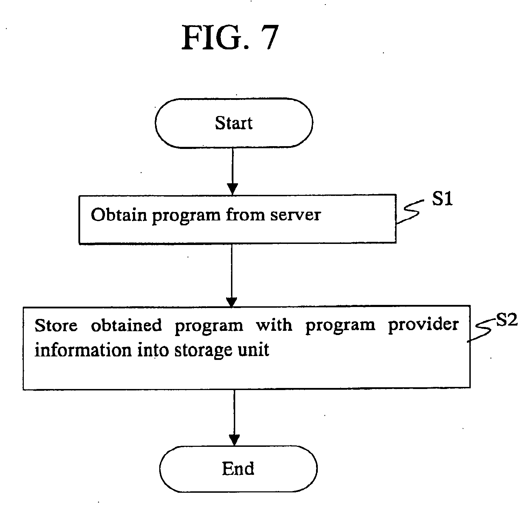

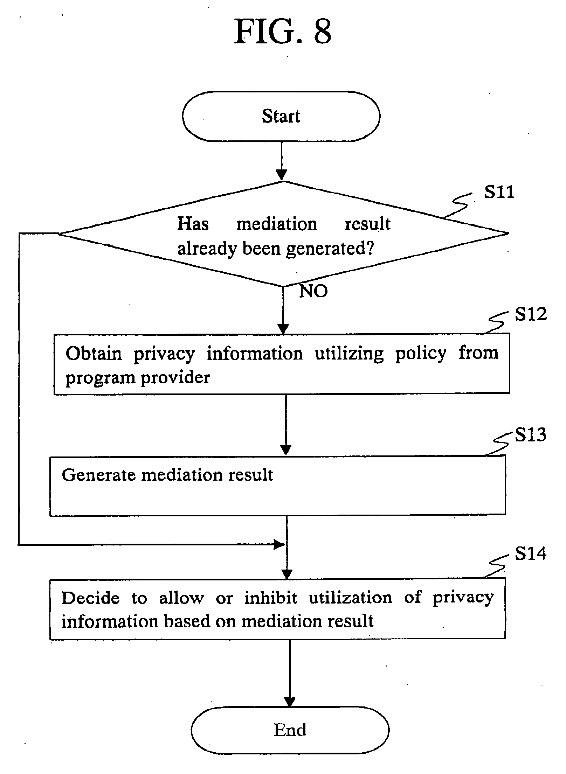

FIG. 7 is a flow chart of an acquisition process for acquiring the program in the first embodiment of the present invention. FIG. 8 is a flow chart of process for deciding to allow or inhibit utilization of privacy information in the first embodiment of the present invention. With reference to FIGS. 2-8, the operations of the program executing apparatus 1 will be described. The processes shown in FIGS. 7 and 8 may be realized by the program executing apparatus 1 which executes the control program which was stored in the storage medium 18.

The operations of the program executing apparatus 1 may be classified into two stages. The first stage is "obtaining program". The second stage is "executing program". In the first process "obtaining program", the program acquisition unit 11 makes an access to the server computer 2 designated by the user or other program, for the purpose of acquiring the program from the designated server computer 2.

In the step S1, the program acquisition unit 11 establishes an communication to the server computer 2 through the communication unit 12 and the network 100, for acquiring the designated program from the program storage unit 21 in the server computer 2.

In the step S2, the program acquisition unit 11 stores the acquired program along with the program provider information into the program storage unit 13.

The designated program from the designated server computer 2 is stored in the program storage unit 13 along with the program provider information. The privacy information utilizing allowability decision unit 151 decides to allow or inhibit the program execution unit 15 to execute the program.

In the second process "executing program", the program execution unit 15 executes the program which was stored in the program storage unit 13 based on the designation by user or other program. In details, if the program execution unit 15 is requested by the program on execution for utilizing the privacy information stored in the privacy information storage unit 16, then the privacy information utilizing allowability decision unit 151 decides to allow or inhibit the utilization of the privacy information. If the utilization of the privacy information is allowed by the privacy information utilizing allowability decision unit 151, the program execution unit 15 is allowed to execute the program. If the utilization of the privacy information is inhibited by the privacy information utilizing allowability decision unit 151, the program execution unit 15 executes predetermined processes such as displaying error message.

In the step S11, the privacy information utilizing allowability decision unit 151 verifies whether any mediation result has already been generated by the mediation unit 14.

If the mediation result has already been generated, then the step S14, the privacy information utilizing allowability decision unit 151 decides to allow or inhibit the utilization of the privacy information requested by the program on execution, based on the mediation result generated by the mediation unit 14.

If the mediation result has not yet been generated, then in the step S12, the mediation unit 14 makes an access to the server computer 2 through the program storage unit 21, based on the program provider information which has a correspondence to the program on execution, so that the mediation unit 14 obtains the privacy information utilizing policy which corresponds to the program on execution from the privacy information utilizing policy storage unit 22 in the server computer 2.

In the step S13, the mediation unit 14 generates the mediation result based on both in the privacy information management policy stored in the privacy information management policy storage unit 17 and the privacy information utilizing policy which was obtained from the privacy information utilizing policy storage unit 22 in the server computer 2.

During the execution of the program, the privacy information utilizing allowability decision unit 151 holds the mediation result generated by the mediation unit 14.

In the step S14, the privacy information utilizing allowability decision unit 151 decides to allow or inhibit the utilization of the privacy information requested by the program on execution, based on the mediation result generated by the mediation unit 14.

If any condition depending on the program is absent in the privacy information management policy stored in the privacy information management policy storage unit 17, then the process in the step S12 is omitted.

It should be noted that, in the step S13, the mediation unit 14 generates the mediation result from the privacy information management policy only. It is possible that the mediation result generated by the mediation unit 14 is stored in the program storage unit 13, so that the privacy information utilizing allowability decision unit 151 refers to the mediation result stored in the program storage unit 13 in order to decide to allow or inhibit the utilization of the privacy information requested by the program on execution, based on the mediation result stored in the program storage unit 13.

The program executing apparatus 1 executes the program with limitation to utilize the privacy information by the program, based on the program provider information.

### SECOND EMBODIMENT :

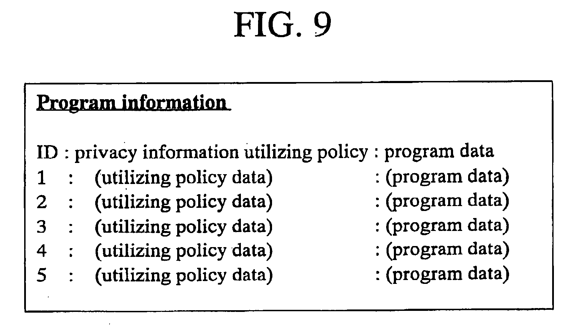

A second embodiment according to the present invention will be described in detail with reference to the drawings. The program executing apparatus 1 has the same structure as shown in FIG. 2 in the above-described first embodiment. A difference in this second embodiment from the first embodiment is in the contents stored in the program storage unit 13. FIG. 9 is a view of one typical example of the program information stored in the program storage unit in the second embodiment in accordance with the present invention. The program storage unit 13 stores the program data along with the privacy information utilizing policy which corresponds to the program.

The program acquisition unit 11 has already acquired the privacy information utilizing policy from the privacy information utilizing policy storage unit 22 in the server computer 2 and stored the obtained privacy information utilizing policy into the program storage unit 13 before the program executing apparatus 1 executes the program. For this reason, the mediation unit 14 does not make an access to the server computer 2 and does not obtain the privacy information utilizing policy in the program execution process.

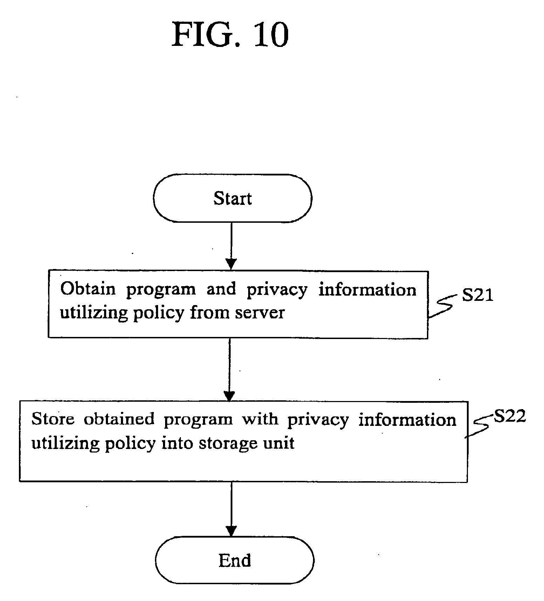

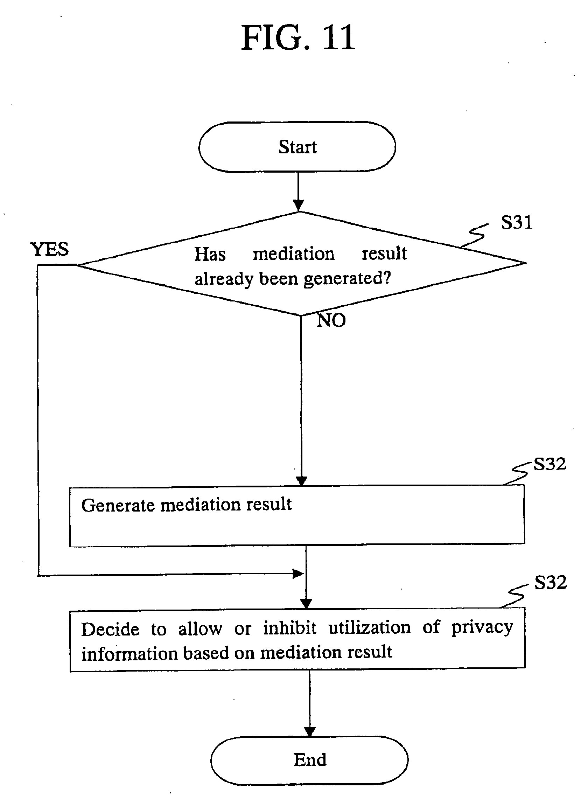

FIG. 10 is a flow chart of program acquisition processes for acquiring the program in the second embodiment of the present invention. FIG. 11 is a flow chart of process for deciding to allow or inhibit utilization of privacy information in the second embodiment of the present invention. With reference to FIGS. 2, and 9-11, the operations of the program executing apparatus 1 will be described.

The operations of the program executing apparatus 1 may be classified into two stages. The first stage is "obtaining program". The second stage is "executing program". In the first process "obtaining program", the program acquisition unit 11 makes an access to the server computer 2 designated by the user or other program, for the purpose of acquiring the program from the designated server computer 2.

In the step S21, the program acquisition unit 11 establishes an communication to the server computer 2 through the communication unit 12 and the network 100, for acquiring not only the designated program from the program storage unit 21 in the server computer 2 but also the designated privacy information utilizing policy, which corresponds to the program, from the privacy information utilizing policy storage unit 22 in the server computer 2.

In the step S22, the program acquisition unit 11 stores the acquired program along with the acquired privacy information utilizing policy into the program storage unit 13.

The designated program and the designated privacy information utilizing policy, which corresponds to the program, are stored in the program storage unit 13. The privacy information utilizing allowability decision unit 151 decides to allow or inhibit the program execution unit 15 to execute the program.

In the second process "executing program", the program execution unit 15 executes the program which was stored in the program storage unit 13 based on the designation by user or other program. In details, the processes are the same as in the first embodiment except for the process for deciding to allow or inhibit the utilization of the privacy information.

In the step S31, the privacy information utilizing allowability decision unit 151 verifies whether any mediation result has already been generated by the mediation unit 14.

If the mediation result has already been generated, then the step S33, the privacy information utilizing allowability decision unit 151 decides to allow or inhibit the utilization of the privacy information requested by the program on execution, based on the mediation result generated by the mediation unit 14.

If the mediation result has not yet been generated, then in the step S32, the mediation unit 14 generates the mediation results based on both the privacy information management policy stored in the privacy information management policy storage unit 17 and the privacy information utilizing policy stored in the program storage unit 13. During the execution of the program, the privacy information utilizing allowability decision unit 151 holds the mediation result generated by the mediation unit 14.

In the step S33, the privacy information utilizing allowability decision unit 151 decides to allow or inhibit the utilization of the privacy information requested by the program on execution, based on the mediation result generated by the mediation unit 14.

It is possible that the mediation result generated by the mediation unit 14 is once stored in the program storage unit 13, so that the privacy information utilizing allowability decision unit 151 may refer to the mediation result stored in the program storage unit 13 in order to decide to allow or inhibit the utilization of the privacy information requested by the program on execution, based on the mediation result stored in the program storage unit 13.

The program executing apparatus 1 executes the program with limitation to utilize the privacy information by the program, based on the designation to the program provider.

### THIRD EMBODIMENT :

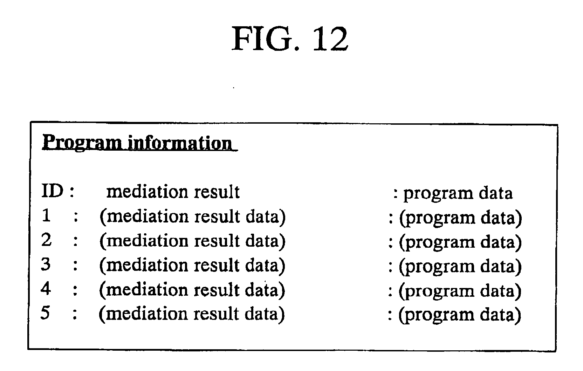

A third embodiment according to the present invention will be described in detail with reference to the drawings. The program executing apparatus 1 has the same structure as shown in FIG. 2 in the above-described first embodiment. A difference in this third embodiment from the first embodiment is in the contents stored in the program storage unit 13. FIG. 12 is a view of one typical example of the program information stored in the program storage unit in the third embodiment in accordance with the present invention. The program storage unit 13 stores the program data along with the mediation result which corresponds to the program, wherein the mediation result was generated by the mediation unit 14.

The mediation unit 14 has previously generated the mediation result and stored the generated mediation result into the program storage unit 13 before the program executing apparatus 1 executes the program. For this reason, the mediation unit 14 does not make the process for generating the mediation result in the program execution process.

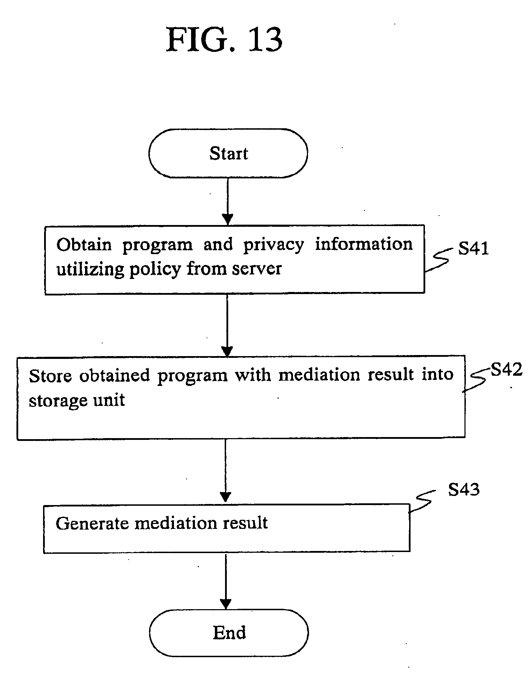

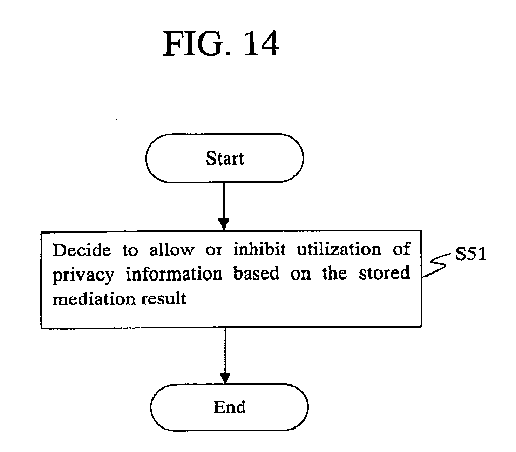

FIG. 13 is a flow chart of program acquisition processes for acquiring the program in the third embodiment of the present invention. FIG. 14 is a flow chart of process for deciding to allow or inhibit utilization of privacy information in the third embodiment of the present invention. With reference to FIGS. 2, and 12-14, the operations of the program executing apparatus 1 will be described.

The operations of the program executing apparatus 1 may be classified into two stages. The first stage is "obtaining program". The second stage is "executing program". In the first process "obtaining program", the program acquisition unit 11 makes an access to the server computer 2 designated by the user or other program, for the purpose of acquiring the program from the designated server computer 2.

In the step S41, the program acquisition unit 11 establishes an communication to the server computer 2 through the communication unit 12 and the network 100, for acquiring not only the designated program from the program storage unit 21 in the server computer 2 but also the designated privacy information utilizing policy, which corresponds to the program, from the privacy information utilizing policy storage unit 22 in the server computer 2.

In the step S42, the mediation unit 14 generates the mediation result based on both the privacy information management policy stored in the privacy information management policy storage unit 17 and the obtained privacy information utilizing policy.

In the step S43, the program acquisition unit 11 stores the obtained program into the program storage unit 13 as well as the mediation unit 14 stores the generated mediation result into the program storage unit 13.

The designated program and the mediation result, which corresponds to the program, are stored in the program storage unit 13. The privacy information utilizing allowability decision unit 151 decides to allow or inhibit the program execution unit 15 to execute the program.

In the second process "executing program", the program execution unit 15 executes the program which was stored in the program storage unit 13 based on the designation by user or other program. In details, the processes are the same as in the first embodiment except for the process for deciding to allow or inhibit the utilization of the privacy information.

In the step S51, the privacy information utilizing allowability decision unit 151 decides to allow or inhibit the utilization of the privacy information requested by the program on execution, based on the mediation result which was stored in the mediation unit 14.

In this embodiment the mediation result generated by the mediation unit 14 was once stored in the program storage unit 13, so that the privacy information utilizing allowability decision unit 151 may refer to the mediation result stored in the program storage unit 13 in order to decide to allow or inhibit the utilization of the privacy information requested by the program on execution, based on the mediation result stored in the program storage unit 13.

The program executing apparatus 1 executes the program with limitation to utilize the privacy information by the program, based on the designation to the program provider.

### FOURTH EMBODIMENT :

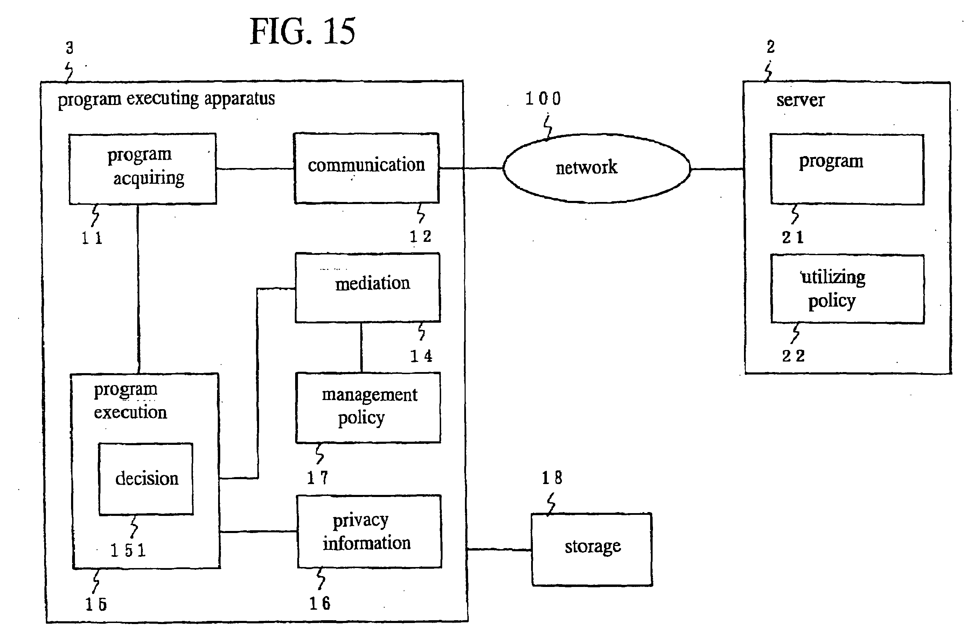

A fourth embodiment according to the present invention will be described in detail with reference to the drawings. The program executing apparatus 1 has a different structure from what is shown in FIG. 2 in the above-described first embodiment. A structural difference in this fourth embodiment from the first embodiment is in the absence of the program storage unit 13 which is present in the first embodiment. FIG. 15 is a block diagram illustrative of a novel program executing apparatus connected through a network to a server computer in a fourth embodiment in accordance with the present invention.

A program executing apparatus 3 is connected through a network 100 to a server computer 2. The server computer 2 includes a program storage unit 21 and a privacy information utilizing policy storage unit 22. The program storage unit 21 stores one or more computer programs to be executed by the program executing apparatus 1. The privacy information utilizing policy storage unit 22 stores one or more privacy information utilizing policy informations.

The program executing apparatus 3 is designed to obtain one or more computer programs from the server computer 5 through the network 100 for executing the obtained programs.

The program executing apparatus 3 includes a program acquisition unit 11, a communication unit 12, a mediation unit 14, a program execution unit 15, a privacy information storage unit 16, a privacy information management policy storage unit 17 and a storage medium 18. The communication unit 12 makes communications through the network 100 to the server computer 2. The program acquisition unit 11 acquires one or more computer programs through the communication unit 12 and the network 100 from the server computer 2, wherein the one or more computer programs were stored in the program storage unit 21 of the server computer 2. The program execution unit 15 executes the one or more computer programs. The program execution unit 15 further includes a privacy information utilizing allowability decision unit 151 for deciding to allow the externally obtained program from the server computer 2 to utilize the privacy information. The privacy information storage unit 16 stores one or more user's privacy informations. The storage medium 18 stores control programs to be executed by the above units respectively. The mediation unit 14 generates a mediation result as allowable conditions for allowing the program stored in the program storage unit 13 to utilize the privacy informations stored in the privacy information storage unit 16. The privacy information management policy storage unit 17 stores privacy information management policy informations.

The program executing apparatus 3 in this fourth embodiment performs concurrent processes for acquiring and executing the program. The program acquisition unit 11 makes an access to the server computer 2 through the program storage unit 21, based on the designation by the user or other program, so that the program acquisition unit 11 acquires the program from the program storage unit 21 in the server computer 2 and also acquires the privacy information utilizing policy, which corresponds to the program, from the privacy information utilizing policy storage unit 22 in the server computer 2.

The program execution unit 15 obtains the program and the privacy information utilizing policy, which corresponds to the program, for the purpose of execution of the program. The processes for execution of the program is the same as in the first embodiment except for the process for deciding to allow or inhibit the utilization of the privacy information.

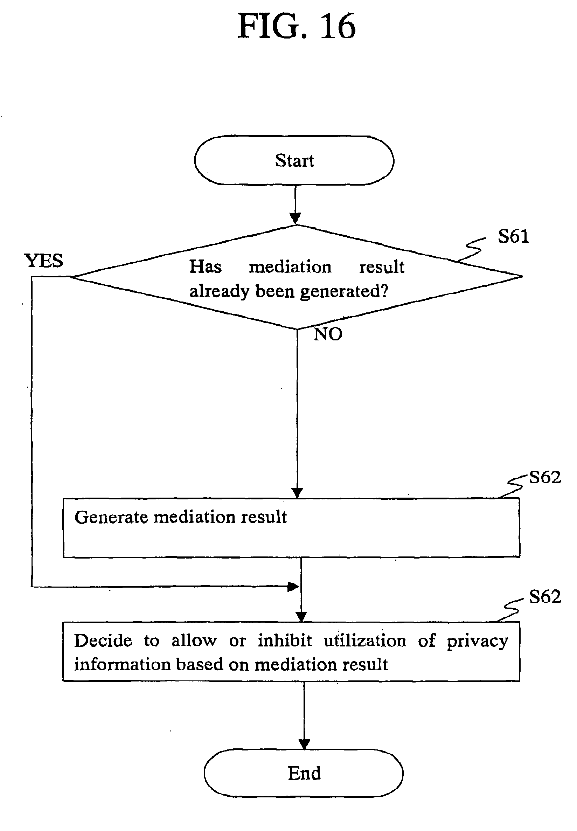

FIG. 16 is a flow chart of process for deciding to allow or inhibit utilization of privacy information in the fourth embodiment of the present invention. With reference to FIGS. 15 and 16, the operations of the program executing apparatus 3 will be described.

As described above, the program acquisition unit 11 establishes an communication to the server computer 2 through the communication unit 12 and the network 100, for acquiring not only the designated program from the program storage unit 21 in the server computer 2 but also the designated privacy information utilizing policy, which corresponds to the program, from the privacy information utilizing policy storage unit 22 in the server computer 2.

In the step S61, the privacy information utilizing allowability decision unit 151 verifies whether any mediation result has already been generated by the mediation unit 14.

If the mediation result has already been generated, then the step S63, the privacy information utilizing allowability decision unit 151 decides to allow or inhibit the utilization of the privacy information requested by the program on execution, based on the mediation result generated by the mediation unit 14.

If the mediation result has not yet been generated, then in the step S62, the mediation unit 14 generates the mediation results based on both the privacy information management policy stored in the privacy information management policy storage unit 17 and the privacy information utilizing policy, which corresponds to the program on execution. During the execution of the program, the privacy information utilizing allowability decision unit 151 holds the mediation result generated by the mediation unit 14.

In the step S63, the privacy information utilizing allowability decision unit 151 decides to allow or inhibit the utilization of the privacy information requested by the program on execution, based on the mediation result generated by the mediation unit 14.

The program executing apparatus 3 executes the program with limitation to utilize the privacy information by the program, based on the designation to the program provider.

### MODIFICATIONS :

In the first and second embodiments, the privacy information utilizing allowability decision unit 151 decides to allow or inhibit the utilization of privacy information upon request for utilization by the program on execution. It is, however, possible as a modification that the privacy information utilizing allowability decision unit 151 automatically decides to allow or inhibit the utilization of privacy information upon start to execute the program, for the purpose of allowing the execution of the program without any interruption for the process for decision to allow or inhibit the utilization of privacy information.

In the first to fourth embodiments, the privacy information storage unit 16 stores all of the privacy information, for allowing the program execution unit 15 to obtain a part or all of the privacy information from the privacy information storage unit 16. It is, however, possible as a modification that if the privacy information requested by the program is absent in the privacy information storage unit 16, then the program execution unit 15 requests user to enter the requested privacy information into the program executing apparatus 1, for allowing the program execution unit 15 to utilize the requested privacy information.

In the first to fourth embodiments, the mediation unit 14 generates the mediation results based on both the privacy information management policy stored in the privacy information management policy storage unit 17 and the privacy information utilizing policy which corresponds to the program on execution. It is, however, possible as a modification that the mediation unit 14 generates the mediation results based on other available information. For example, it is possible to obtain a server-reliability-related information which indicates the level of reliability of the server computer 2 from a third party through the network 100, wherein the third party is a provider who provides the server-reliability-related informations of the servers.

In the first to fourth embodiments, the single server computer 2 stores both the program and the privacy information utilizing policy. It is, however, possible as a modification that the single server computer 2 stores the program only, while the privacy information utilizing policy is stored in other computer or storage device, to which the program executing apparatus 1 may have an access for availing the privacy information utilizing policy which corresponds to the program, based on an instruction by the server computer 2.

It is further possible as a modification to the first to fourth embodiments that a default privacy information utilizing policy is given to the program executing apparatus 1, so that if the privacy information utilizing policy in the server computer 2 becomes unavailable or default, then the default privacy information utilizing policy may be used. This makes it possible to generate the mediation result and to make a decision to allow or inhibit the utilization of the privacy information based on the mediation result even if the server computer 2 has not set the privacy information utilizing policy.

Although the invention has been described above in connection with several preferred embodiments therefor, it will be appreciated that those embodiments have been provided solely for illustrating the invention, and not in a limiting sense. Numerous modifications and substitutions of equivalent materials and techniques will be readily apparent to those skilled in the art after reading the present application, and all such modifications and substitutions are expressly understood to fall within the true scope and spirit of the appended claims.

## Claims

**1.** A method for protecting at least one privacy information requested to be utilized by at least one program obtained from at least one external device, said method including :
obtaining at least one program from said at least one external device;
obtaining at least one privacy information utilizing policy, which corresponds to said at least one program, and said at least one privacy information utilizing policy indicating a utilizing policy to utilize the obtained privacy informations by said program ;
generating at least one mediation result based on at least both said at least one privacy information utilizing policy and at least one privacy information management policy which indicates a management policy to allow said at least one program to utilize at least one privacy information ; and
deciding to allow or inhibit said at least one program to utilize said at least one privacy information based on said at least one mediation result.

**2.** The method as claimed in claim 1, wherein said at least one external device comprises at least one server computer, and said at least one privacy information utilizing policy is obtained from said at least one server computer.

**3.** The method as claimed in claim 1, wherein said at least one external device comprises at least one server computer, and said at least one privacy information utilizing policy is obtained from at least one different external device from said at least one server computer.

**4.** The method as claimed in one of claims 1 to 3, wherein said program and said at least one privacy information utilizing policy corresponding to said program are given with a correspondence with each other and stored in a storage unit.

**5.** The method as claimed in one of claims 1 to 4, wherein said deciding step is made upon receipt of a privacy information utilizing request from said at least one program which is on execution process.

**6.** The method as claimed in one of claims 1 to 4, wherein said deciding step is made upon starting to execute said at least one program for allowing execution of said at least one program free from any interruption of said deciding step.

**7.** The method as claimed in one of claims 1 to 6, wherein said at least one privacy information has been stored in a privacy information storage unit.

**8.** The method as claimed in claim 7, wherein if said at least one privacy information absent in said privacy information storage unit is requested to be utilized by said program, then a request for entry of said at least one privacy information is issued to an external entity.

**9.** The method as claimed in one of claims 1 to 8, wherein if said at least one privacy information utilizing policy is not available from said external device, then a default privacy information utilizing policy is used.

**10.** The method as claimed in one of claims 1 to 9, further including:
obtaining, together with said at least one program, at least one program provider information which indicates at least one location from which said at least one program is provided, and
wherein said at least one privacy information utilizing policy is obtained based on said at least one program provider information.

**11.** The method as claimed in one of claims 1 to 10, further including:
storing said at least one mediation result generated into a storage unit; and
verifying whether or not said at least one mediation result is present in said storage unit, and only if said at least one mediation result is absent, said step of generating said at least one mediation result is made.

**12.** The method as claimed in one of claims 1 to 11, further including:
verifying whether or not said at least one privacy information management policy has a program dependency ; and
if said at least one privacy information management policy is free of any program dependency, then said step of obtaining said at least one privacy information utilizing policy is not carried out, and said at least one mediation result is generated based on said at least one privacy information management policy only.

**13.** The method as claimed in one of claims 1 to 12, wherein said at least one privacy information utilizing policy is obtained upon receipt of a privacy information utilizing request from said at least one program which is on execution process.

**14.** The method as claimed in one of claims 1 to 13, wherein said at least one privacy information utilizing policy is obtained upon starting to execute said at least one program for allowing execution of said at least one program free from any interruption of said deciding step.

**15.** The method as claimed in one of claims 1 to 14, wherein said at least one privacy information utilizing policy is obtained together with said at least one program.

**16.** The method as claimed in one of claims 1 to 15, wherein said program and said at least one mediation result are given with a correspondence with each other and stored in a storage unit.

**17.** The method as claimed in claim 16, further including :
verifying whether or not said at least one mediation result is present in said storage unit, and only if said at least one mediation result is absent, said step of generating said at least one mediation result is made.

**18.** A method for protecting at least one privacy information requested to be utilized by at least one program obtained from at least one external device, said method including :
obtaining at least one program from said at least one external device ; and
deciding to allow or inhibit said at least one program to utilize said at least one privacy information based on at least one mediation result obtained based on at least one conditional information to allow or inhibit said at least one program to utilize at least one privacy information.

**19.** The method as claimed in claim 18, wherein said at least one conditional information is given from at least one of an external device and an external entity.

**20.** The method as claimed in claim 18 or 19, wherein said at least one conditional information comprises at least one mediation result obtained based on at least one privacy information management policy which indicates a management policy to allow said at least one program to utilize at least one privacy information, provided that said at least one privacy information management policy is free of any program dependency.

**21.** The method as claimed in one of claims 18 to 20, wherein said at least one conditional information comprises at least one mediation result obtained based on both at least one privacy information management policy which indicates a management policy to allow said at least one program to utilize at least one privacy information and at least one privacy information utilizing policy indicating a utilizing policy to utilize the obtained privacy informations by said program, provided that said at least one privacy information management policy has a program dependency.

**22.** The method as claimed in one of claims 18 to 21, wherein said at least one external device comprises at least one server computer, and said at least one privacy information utilizing policy is obtained from said at least one server computer.

**23.** The method as claimed in claim 21 or 22, wherein said at least one external device comprises at least one server computer, and said at least one privacy information utilizing policy is obtained from at least one different external device from said at least one server computer.

**24.** The method as claimed in one of claims 21 to 23, wherein said program and said at least one privacy information utilizing policy corresponding to said program are given with a correspondence with each other and stored in a storage unit.

**25.** The method as claimed in one of claims 21 to 24, wherein said deciding step is made upon receipt of a privacy information utilizing request from said at least one program which is on execution process.

**26.** The method as claimed in one of claims 18 to 25, wherein said deciding step is made upon starting to execute said at least one program for allowing execution of said at least one program free from any interruption of said deciding step.

**27.** The method as claimed in one of claims 18 to 26, wherein said at least one privacy information has been stored in a privacy information storage unit.

**28.** The method as claimed in claim 27, wherein if said at least one privacy information absent in said privacy information storage unit is requested to be utilized by said program, then a request for entry of said at least one privacy information is issued to an external entity.

**29.** The method as claimed in one of claims 21 to 28, wherein if said at least one privacy information utilizing policy is not available from said external device, then a default privacy information utilizing policy is used.

**30.** The method as claimed in one of claims 21 to 29, further including:
obtaining, together with said at least one program, at least one program provider information which indicates at least one location from which said at least one program is provided, and
wherein said at least one privacy information utilizing policy is obtained based on said at least one program provider information.

**31.** The method as claimed in one of claims 18 to 30, further including:
storing said at least one conditional information into a storage unit; and
verifying whether or not said at least one conditional information is present in said storage unit, and only if said at least one conditional information is absent, said step of generating said at least one conditional information is made.

**33.** The method as claimed in one of claims 21 to 31 wherein said at least one privacy information utilizing policy is obtained upon receipt of a privacy information utilizing request from said at least one program which is on execution process.

**34.** The method as claimed in one of claims 21 to 33, wherein said at least one privacy information utilizing policy is obtained upon starting to execute said at least one program for allowing execution of said at least one program free from any interruption of said deciding step.

**35.** The method as claimed in one of claims 21 to 34, wherein said at least one privacy information utilizing policy is obtained together with said at least one program.

**36.** The method as claimed in one of claims 18 to 35, wherein said program said at least one conditional information are given with a correspondence with each other and stored in a storage unit.

**37.** The method as claimed in claim 36, further including :
verifying whether or not said at least one conditional information is present in said storage unit, and only if said at least one conditional information is absent, said step of generating said at least one conditional information is made.

**38.** A computer-readable-program to be executed for implementing a process for protecting at least one privacy information requested to be utilized by at least one program obtained from at least one external device, said computer-readable-program including:
obtaining at least one program from said at least one external device ;
obtaining at least one privacy information utilizing policy, which corresponds to said at least one program, and said at least one privacy information utilizing policy indicating a utilizing policy to utilize the obtained privacy informations by said program;
generating at least one mediation result based on at least both said at least one privacy information utilizing policy and at least one privacy information management policy which indicates a management policy to allow said at least one program to utilize at least one privacy information; and
deciding to allow or inhibit said at least one program to utilize said at least one privacy information based on said at least one mediation result.

**39.** A computer-readable-program to be executed for implementing a process for protecting at least one privacy information requested to be utilized by at least one program obtained from at least one external device, said computer-readable-program including:
obtaining at least one program from said at least one external device ; and
deciding to allow or inhibit said at least one program to utilize said at least one privacy information based on at least one mediation result obtained based on at least one conditional information to allow or inhibit said at least one program to utilize at least one privacy information.

**40.** A hardware device for implementing a process for protecting at least one privacy information requested to be utilized by at least one program obtained from at least one external device, said hardware device including :
a first functional unit for obtaining at least one program from said at least one external device ; and
a second functional unit for deciding to allow or inhibit said at least one program to utilize said at least one privacy information based on at least one mediation result obtained based on at least one conditional information to allow or inhibit said at least one program to utilize at least one privacy information.

**41.** An apparatus for executing at least one program obtained from at least one external device, said apparatus including :
a program obtaining unit for obtaining at least one program from said at least one external device as well as at least one privacy information utilizing policy, which corresponds to said at least one program, and said at least one privacy information utilizing policy indicating a utilizing policy to utilize the obtained privacy informations by said program ;
a mediation unit for generating at least one mediation result based on at least both said at least one privacy information utilizing policy and at least one privacy information management policy which indicates a management policy to allow said at least one program to utilize at least one privacy information ; and
a deciding unit for deciding to allow or inhibit said at least one program to utilize said at least one privacy information based on said at least one mediation result.

**42.** The apparatus as claimed in claim 41, wherein said at least one external device comprises at least one server computer, and said at least one privacy information utilizing policy is obtained from said at least one server computer.

**43.** The apparatus as claimed in claim 41, wherein said at least one external device comprises at least one server computer, and said at least one privacy information utilizing policy is obtained from at least one different external device from said at least one server computer.

**44.** The apparatus as claimed in one of claims 41 to 43, further including a storage unit for storing said program and said at least one privacy information utilizing policy corresponding to said program with a correspondence with each other.

**45.** The apparatus as claimed in one of claims 41 to 44, wherein said deciding unit is performed receipt of a privacy information utilizing request from said at least one program which is on execution process.

**46.** The apparatus as claimed in one of claims 41 to 45, wherein said deciding unit is performed upon starting to execute said at least one program for allowing execution of said at least one program free from any interruption of said deciding step.

**47.** The apparatus as claimed in one of claims 41 to 46, further including a privacy information storage unit for storing said at least one privacy information.

**48.** The apparatus as claimed in claim 47, wherein if said at least one privacy information absent in said privacy information storage unit is requested to be utilized by said program, then said apparatus issues a request for entry of said at least one privacy information to an external entity.

**49.** The apparatus as claimed in one of claims 41 to 48, wherein if said at least one privacy information utilizing policy is not available from said external device, then a default privacy information utilizing policy is used.

**50.** The apparatus as claimed in one of claims 41 to 49, wherein
said obtaining unit obtains, together with said at least one program, at least one program provider information which indicates at least one location from which said at least one program is provided, and
said obtaining unit further obtains said at least one privacy information utilizing policy based on said at least one program provider information.

**51.** The apparatus as claimed in one of claims 41 to 50, further including:
a mediation result storage unit for storing said at least one mediation result generated; and
a verifying unit for verifying whether or not said at least one mediation result is present in said storage unit, and only if said at least one mediation result is absent, said mediation unit is performed.

**52.** The apparatus as claimed in one of claims 41 to 51, further including:
a verifying unit for verifying whether or not said at least one privacy information management policy has a program dependency ; and
if said at least one privacy information management policy is free of any program dependency, then said obtaining unit does not obtain said at least one privacy information utilizing policy, and said mediation unit generates said at least one mediation result based on said at least one privacy information management policy only.

**53.** The apparatus as claimed in one of claims 41 to 52, wherein said obtaining unit obtains said at least one privacy information utilizing policy upon receipt of a privacy information utilizing request from said at least one program which is on execution process.

**54.** The apparatus as claimed in one of claims 41 to 53, wherein said obtaining unit obtains said at least one privacy information utilizing policy upon starting to execute said at least one program for allowing execution of said at least one program free from any interruption of said deciding step.

**55.** The apparatus as claimed in one of claims 41 to 54, wherein said obtaining unit obtains said at least one privacy information utilizing policy together with said at least one program.

**56.** The apparatus as claimed in one of claims 41 to 55, further including:
a storage unit for storing said program and said at least one mediation result with a correspondence with each other.

**57.** The apparatus as claimed in claim 56, further including:
a verifying unit for verifying whether or not said at least one mediation result is present in said storage unit, and only if said at least one mediation result is absent, said mediation unit is performed.

**58.** An apparatus for executing at least one program obtained from at least one external device, said apparatus including :
an obtaining unit for obtaining at least one program from said at least one external device ; and
a deciding unit to allow or inhibit said at least one program to utilize said at least one privacy information based on at least one mediation result obtained based on at least one conditional information to allow or inhibit said at least one program to utilize at least one privacy information.

**59.** The apparatus as claimed in claim 58, wherein said at least one conditional information is given from at least one of an external device and an external entity.

**60.** The apparatus as claimed in claim 58 or 59, wherein said at least one conditional information comprises at least one mediation result obtained based on at least one privacy information management policy which indicates a management policy to allow said at least one program to utilize at least one privacy information, provided that said at least one privacy information management policy is free of any program dependency.

**61.** The apparatus as claimed in one of claims 58 to 60, wherein said at least one conditional information comprises at least one mediation result obtained based on both at least one privacy information management policy which indicates a management policy to allow said at least one program to utilize at least one privacy information and at least one privacy information utilizing policy indicating a utilizing policy to utilize the obtained privacy informations by said program, provided that said at least one privacy information management policy has a program dependency.

**62.** The apparatus as claimed in one of claims 58 to 61, wherein said at least one external device comprises at least one server computer, and said at least one privacy information utilizing policy is obtained from said at least one server computer.

**63.** The apparatus as claimed in claim 61, wherein said at least one external device comprises at least one server computer, and said at least one privacy information utilizing policy is obtained from at least one different external device from said at least one server computer.

**64.** The apparatus as claimed in one of claims 61 to 63, further including a storage unit for storing said program and said at least one privacy information utilizing policy corresponding to said program are given with a correspondence with each other.

**65.** The apparatus as claimed in one of claims 61 to 64, wherein said deciding unit is performed upon receipt of a privacy information utilizing request from said at least one program which is on execution process.

**66.** The apparatus as claimed in one of claims 58 to 65, wherein said deciding unit is performed upon starting to execute said at least one program for allowing execution of said at least one program free from any interruption of said deciding step.

**67.** The apparatus as claimed in one of claims 58 to 66, further including a storage information storage unit for storing said at least one privacy information.

**68.** The apparatus as claimed in claim 67, wherein if said at least one privacy information absent in said privacy information storage unit is requested to be utilized by said program, then said apparatus issues a request for entry of said at least one privacy information to an external entity.

**69.** The apparatus as claimed in one of claims 61 to 68, wherein if said at least one privacy information utilizing policy is not available from said external device, then a default privacy information utilizing policy is used.

**70.** The apparatus as claimed in one of claims 61 to 69, further including:
said obtaining unit obtains, together with said at least one program, at least one program provider information which indicates at least one location from which said at least one program is provided, and
said obtaining unit further obtains said at least one privacy information utilizing policy based on said at least one program provider information.

**71.** The apparatus as claimed in one of claims 58 to 70, further including:
a storage unit for storing said at least one conditional information ; and
a verifying unit for verifying whether or not said at least one conditional information is present in said storage unit, and only if said at least one conditional information is absent, said at least one conditional information is generated.

**73.** The apparatus as claimed in one of claims 61 to 71, wherein obtaining unit: obtains said at least one privacy information utilizing policy upon receipt of a privacy information utilizing request from said at least one program which is on execution process.

**74.** The apparatus as claimed in one of claims 61 to 73, wherein obtaining unit: obtains said at least one privacy information utilizing policy upon starting to execute said at least one program for allowing execution of said at least one program free from any interruption of said deciding step.

**75.** The apparatus as claimed in one of claims 61 to 74, wherein obtaining unit: obtains said at least one privacy information utilizing policy together with said at least one program.

**76.** The apparatus as claimed in one of claims 58 to 75, further including a storage unit for storing said program and said at least one conditional information are given with a correspondence with each other.

**77.** The apparatus as claimed in claim 76, further including :
a verifying unit for verifying whether or not said at least one conditional information is present in said storage unit, and only if said at least one conditional information is absent, said at least one conditional information is generated.
